# EUROPÄISCHE PATENTANMELDUNG

(11) **EP 0 773 340 A1**
(43) Veröffentlichungstag der Anmeldung: **14.05.1997**
(21) Anmeldenummer: 96113122.4
(22) Anmeldetag: 16.08.1996
(51) Int. Cl.: E06B 3/26, B29C 44/18, B29C 44/34

(54) **Verfahren zum Herstellen eines wärmegedämmten Verbundprofiles**

(30) Priorität: 07.11.1995 DE 19541412
(71) Anmelder: EDUARD HUECK GmbH & CO. KG, D-58511 Lüdenscheid (DE)
(72) Erfinder: Stein, Horst, 58509 Lüdenscheid (DE); Höcker, Herbert, 58636 Iserlohn (DE); Pfeiffer, Jürgen, 58802 Balve (DE)

(57) **Zusammenfassung**

2.1 Bei der Herstellung von wärmegedämmten Verbundprofilen tritt aus den Stirnenden der Profile Schaummasse aus, solange diese noch nicht ausgehärtet ist.
2.2 Um das Austreten der Schaummasse zu verhindern, werden die Verbundprofile (3) nach dem Einrollen der Stege mittels eines Förderers (4) quer zu ihrer Längsrichtung abtransportiert und deren Stirnenden durch umlaufende Riemen (7) abgedeckt, wobei als Trennmittel zwischen den Stirnenden und den Trumen der Riemen (7) Dichtbänder (15) angeordnet sind. Die Dichtbänder (15) und die Riemen (7) stehen bei einem Ausführungsbeispiel so, daß die oberen Kanten einen Schlitz (19) bilden, damit das verdrängte Gas aus der expandierenden Schaummasse (14) und dem diese aufnehmenden Kanal entweichen kann. Nach einer anderen Ausführungsform können aber auch die Stirnflächen des Kanals verschlossen sein, wenn die Isolierstege (12, 13) mit Entlüftungsbohrungen (20) versehen sind.
2.3 Das erfindungsgemäße Verfahren ist bevorzugt für wärmegedämmte Aluminium-Profile einsetzbar.

## Beschreibung

Die Erfindung betrifft ein Verfahren zum Herstellen eines wärmegedämmten Verbundprofils, das aus mehreren vorzugsweise aus Metall bestehenden, durch Isolierstege miteinander verbundenen Profilschienen gebildet ist, bei dem die Isolierstege in hinterschnittene Längsnuten von Profilschienen eingeführt und dort fixiert werden, wobei in die zwischen den Isolierstegen liegende Rinne eine expandierfähige, aushärtbare Schaummasse eingebracht wird.

Verbundprofile dieser Art werden unter anderem für die Herstellung von Tür- und Fensterrahmen, Fassadenkonstruktionen und dergleichen verwendet. Die zugehörigen Profilschienen bestehen vorzugsweise aus Aluminium. Überlicherweise erfolgt die Verbindung der Profilschienen durch im Abstand zueinander angeordnete Isolierstege aus einem hochbelastbaren Kunststoff. Die dadurch begrenzte sich in Profillängsrichtung erstreckende Kammer wird zur zusätzlichen Wärmedämmung mit einer Schaummasse ausgefüllt.

Ein solches Verfahren ist aus der DE 28 31 987 C2 bekannt. Dabei sind die beiden Profilschienen mit Nuten versehen, in die die Isolierstege während der Herstellung eingeschoben werden. Das Einbringen der Schaummasse erfolgt im Zuge des Zusammenschiebens der stangenförmigen Profilschienen. Danach durchlaufen die Verbundprofile einer Einrolleinrichtung, um die die Nuten begrenzenden Stege der Profilschienen so zu verformen, daß die Isolierstege kraftschlüssig in den Nuten festgelegt werden. Während der letzten Verfahrensschritte schäumt die Isoliermasse auf und härtet allmählich aus. Während der Aufschäumung der Isoliermasse tritt diese stirnseitig aus den Verbundprofilen aus. Dadurch läßt es sich nicht vermeiden, daß auch die die Verbundprofile transportierenden Förderer, im allgemeinen Rollenförderer, durch die Schaummasse verschmutzt werden und wichtige Funktionsteile durch die aushärtende Schaummasse verkleben. Während des Aufschäumens und Aushärtens der Isoliermasse können sich auch Lunkerstellen und Hohlräume in dem sich bildenden Isolierkern bilden. Da bei der Weiterbearbeitung die fertigen Verbundprofile zum Beispiel für eine Eloxierbehandlung für längere Zeit in Bäder getaucht werden, besteht die große Gefahr, daß die Badflüssigkeit in diese Hohlräume des Isolierkerns eindringt. Durch die daraus folgende Dampfdruckwirkung in solchen Fällen können sich die Verbundprofile im Extremfall sogar so stark verbiegen, daß sie zu Ausschuß werden. In jedem Fall führen solche Hohlräume zu einer erheblichen Qualitätseinbuße der Verbundprofile bei der späteren Weiterverarbeitung.

Der Erfindung liegt die Aufgabe zugrunde, ein Verfahren zum Herstellen wärmegedämmter Verbundprofile so weiter zu entwickeln, daß eine hohe Qualität sichergestellt wird, indem durch Verhinderung des Austretens der noch nicht gänzlich ausgehärteten Schaummasse aus der Schaumkammer eine größtmögliche Dichte des Isolierkernes angestrebt und das Entstehen von Hohlräumen und Löchern in dem Isolierkern vermieden wird.

Diese Aufgabe wird gelöst, indem das Verbundprofii nach dem Einbringen der Isoliermasse zumindest während der Aufschäumphase der Schaummasse mittels eines Förderers quer zu seiner Längsrichtung abtransportiert wird, wobei die Stirnenden des Verbundprofiles wenigstens teilweise mittels Verschließeinrichtungen abgedeckt werden, die jeweils synchron mit dem Verbundprofil bewegbare Verschließelemente aufweisen und wobei die Verschließeinrichtungen und/oder Teile des Verbundprofiles mit Entlüftungsöffnungen versehen sind.

Da die Verbundprofile quer zu ihrer Längsrichtung abtransportiert werden, sind deren Stirnenden leicht zugänglich und sie lassen sich ohne manuelle Arbeiten durch eine konstruktiv einfach zu gestaltende Verschließeinrichtung abdecken, um zu verhindern, daß die Schaummasse aus den Profilenden austritt. Dadurch läßt sich ein Isolierkern ausreichender Dichte frei von Hohlräumen bilden. Durch das synchron mitlaufende Verschließelement werden gleichzeitig die einzelnen Verbundprofile mitgenommen, so daß die Quer-Ablaufförderer beispielsweise eine antriebsfreie Rollenbahn sein kann. Da die Verschließeinrichtung und/oder Teile der Verbundprofile stets so ausgelegt sind, daß das beim Expandieren der Schaummasse entstehende Gas gezielt entweichen kann, werden zu Hohlräumen führende Einschlüsse vermieden.

In besonders rationeller Weise lassen sich die Stirnenden von mehreren hintereinander angeordneten, quer abtransportierten Verbundprofilen abdecken, wenn das Verschließelement jeder Verschließeinrichtung ein angetriebener Riementrieb ist, dessen Umlenkrollen auf vertikalen Achsen angeordnet sind, so daß der die Stirnenden abdeckende Riementrieb senkrecht steht.

Damit der Riemen nicht durch die Schaummasse verschmutzt wird, ist vorgesehen, daß zwischen den Stirnenden der Verbundprofile und dem zugeordneten Trum des Riemens des Riementriebes ein daran fixiertes Dichtband angeordnet ist. Dieses Dichtband kann aus einem elastisch verformbaren porösen Material bestehen. Zur gezielten Entlüftung ist vorgesehen, daß das Dichtband an der die Stirnenden der Verbundprofile berührenden Seite eine sich in Längsrichtung erstreckende innerhalb des Höhenbereiches der Kammer für die Schaummasse liegende Entlüftungsnut aufweist.

Eine konstruktiv einfach Lösung wird auch erreicht, wenn die obere Kante und/oder die untere Kante des Riemens des Riementriebes und gegebenenfalls die obere und/oder die untere Kante des Dichtbandes gegenüber der zugeordneten Kante der die Schaummasse aufnehmenden Kammer zur Bildung von schlitzartigen Entlüftungsöffnungen jeweils in Richtung zur gegenüberliegenden Kante versetzt stehen. Bei dieser Lösung ist bereits durch die Höhenlage des Riemens und gegebenenfalls des Dichtbandes die Entlüftung der Schaummasse bzw. des bis dahin noch nicht komplett ausgehärteten Isolierkerns gewährleistet.

Eine ausreichende Entlüftung ist aber auch dann möglich, wenn Teile des Verbundprofiles, vorzugsweise die Isolierstege, mit Entlüftungsöffnungen versehen sind. Obwohl die Entlüftung durch die Stege oder durch die Stirnseiten der Verbundprofile für sich allein ausreichend ist, kann auch die Kombination beider Möglichkeiten vorteilhaft sein. Die Lüftung durch die Isolierstege bietet den Vorteil, daß eine Entlüftung über die ganze Länge oder an gezielten Stellen, zum Beispiel lediglich in den Stirnendbereichen, erfolgen kann, wobei die Luft direkt ins Freie entweicht, während bei einer Entlüftung durch Stege der Profilschienen die Luft zunächst in die angrenzenden Hohlkammern der Verbundprofile strömen würde. Die Größe der Entlüftungsöffnungen ist so gewählt, daß Partikel der Schaummasse zurückgehalten werden.

Anhand der Zeichnungen wird die Erfindung nachstehend näher erläutert.

Es zeigen:
- Figur 1: eine nach dem erfindungsgemäßen Verfahren arbeitende Quer-Transporteinrichtung hinter dem Ende einer Herstellungsanlage für die ausgeschäumten Verbundprofile,
- Figur 2: eine Stirnansicht eines Verbundprofiles sowie die das Stirnende abdeckende Verschließeinrichtung nach einer ersten Ausführungsform,
- Figur 3: eine Querschnittsansicht wie Figur 2 gemäß einer zweiten Ausführungsform und
- Figur 4: eine von den Beispielen nach den Figuren 2 und 3 abgewandelte dritte Ausführungsform des Erfindungsgegenstandes.

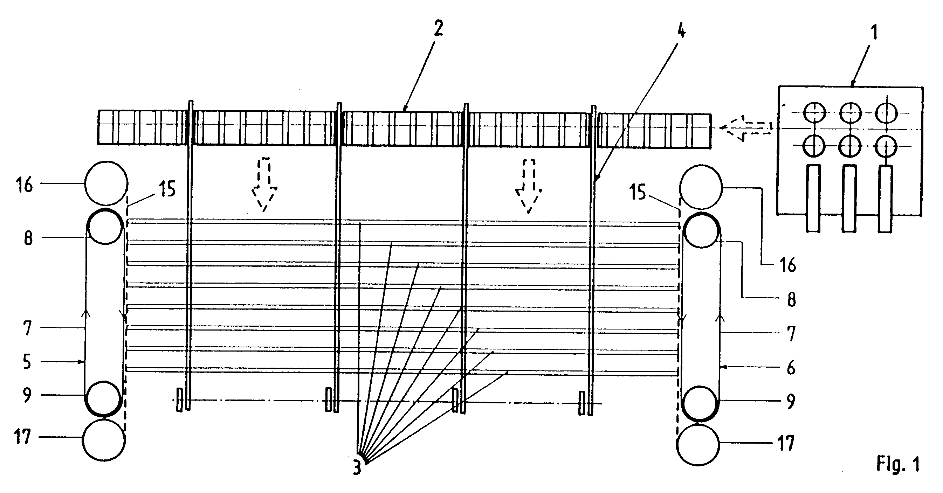

Die in der Figur 1 dargestellte Anlage ist hinter einer schematisch gezeigten Einrollanlage 1 angeordnet, in der die ausgeschäumten und zusammengeschobenen Aluminiumprofile nacheinander zu dem fertigen Verbundprofil verpreßt werden, indem die die Nuten der Profilschienen begrenzenden Stege an die Isolierstege durch Verformen angedrückt werden. Der Einrollanlage 1 ist eine Umsetzeinrichtung 2 nachgeschaltet, um jedes Verbundprofil 3 nach dem Durchlaufen der Einrollanlage quer zur Längsrichtung an einen Rollenförderer 4 zu übergeben. Im dargestellten Ausführungsbeispiel liegen acht einzelne Verbundprofile 3 auf dem Förderer 4, der kontinuierlich die einzelnen Verbundprofile 3 abtransportiert. Dem Förderer sind zum Abdecken der Stirnflächen der Verbundprofile 3 zwei Verschließeinrichtungen in Form von Riementrieben 5, 6 zugeordnet. Jeder Riemen 7 ist dabei über zwei Umlenkrollen 8, 9 geführt, die auf vertikalen Wellen gelagert sind. Der Förderer 4 hat praktisch die Funktion eines Horizontalförderers. Von den Umlenkrollen 9 ist jeweils eine angetrieben. Der Riemen 7 ist an der an den Umlenkrollen 8, 9 anliegenden Seite mit einem im Querschnitt trapezförmigen Führungssteg 7a versehen.

Jedes Verbundprofil 3 besteht aus zwei aus Aluminium hergestellten Profilschienen 10, 11, die durch zwei Isolierstege 12, 13 fest verbunden sind. In die durch die Isolierstege begrenzte Rinne auf der Länge des Verbundprofils ist während des Herstellungprozesses eine aushärtbare Schaummasse 14 aus zum Beispiel mit Treibmittel versehenen Polyuretan eingespritzt worden, die im ausgehärteten Zustand den Isolierkern bilden.

Zwischen den Stirnenden der Verbundprofile 3 und den zugewandten Trumen der Riemen 7 liegt ein Dichtband 15, das von einer Rolle 16 abgespult und nach einer bestimmten Betriebszeit auf eine zweite Rolle 17 aufgewickelt wird. Im Betriebszustand der Anlage findet während des Quertransports keine Relativbewegung zwischen den Dichtbändern 15 und dem Trumen 7 des Transportbandes statt. Jedes Dichtband 15 ist eine Schaumfolie, die als Trennmittel wirkt und eine ausreichende Kompressibilität gewährleistet, um die Stirnenden der Profile auch bei größeren Toleranzunterschieden der Enden der Verbundprofile zuverlässig abzudichten.

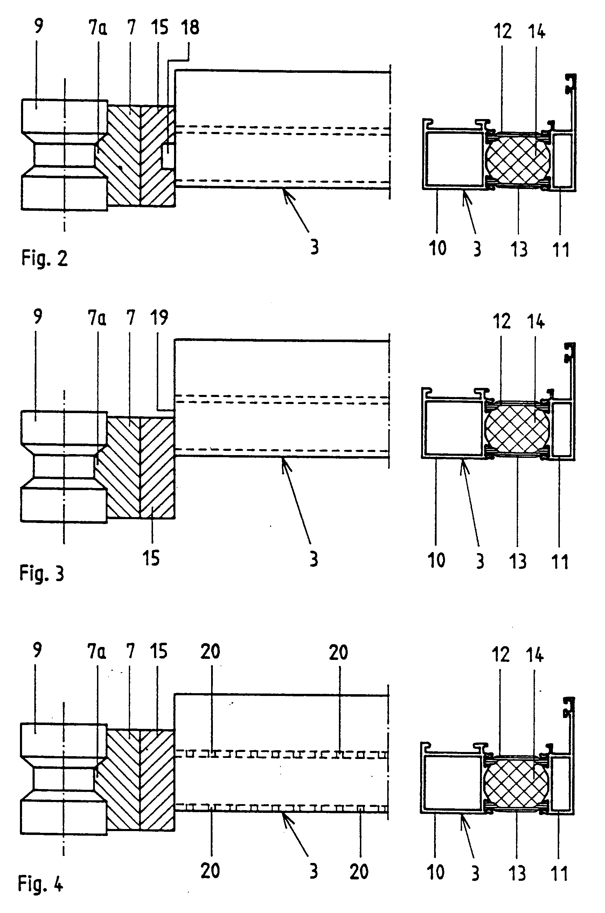

Bei der Ausführung nach der Figur 2 ist das Dichtband mit einer sich in Längsrichtung erstreckenden Entlüftungsnut 18 versehen, die auf der Höhe der Schaummasse 14, so daß die während der Expansionsphase der Isolierschaummasse aus dieser entweichenden Gase an beiden Seiten leicht austreten können. Bei der Ausführung nach der Figur 3 steht der Riemen 7 und das Dichtband 15 so zu der Schaummasse 14, daß an der zwischen der oberen Kante des senkrecht stehenden Dichtbandes 15 und der oberen Kante der Schaummasse 14 ein Spalt 19 von relativ geringer Höhe entsteht.

Bei dem dritten Ausführungsbeispiel nach der Figur 4 werden die Stirnflächen der Isolierkammer 14 jedes Verbundprofiles durch das Dichtband 15 komplett verschlossen. Dies ist möglich, weil dabei die Entlüftung über Bohrungen 20 mit einem geringen Durchmesser erfolgen kann, die in den Isolierstegen 12 und 13 vorgesehen sind und über die gesamte Länge verteilt sein können, zweckmäßig aber nur in den Stirnendbereichen angeordnet sind.

In nicht dargestellter Weise können auch Bohrungen in den metallenen Stegen der Profilschienen vorgesehen sein, die an die Schaummasse 14 angrenzen. Diese Möglichkeit gestaltet sich allerdings nicht so günstig wie bei den vorstehend beschriebenen Ausführungsbeispielen.

## Patentansprüche

1. Verfahren zum Herstellen eines wärmegedämmten Verbundprofils, das aus mehreren vorzugsweise aus Metall bestehenden, durch Isolierstege miteinander verbundenen Profilschienen gebildet ist, bei dem die Isolierstege in hinterschnittene Längsnuten von Profilschienen eingeführt und dort fixiert werden, wobei in die zwischen den Isolierstegen liegende Rinne eine expandierfähige, aushärtbare Schaummasse eingebracht wird, dadurch gekennzeichnet, daß das Verbundprofil (3) nach dem Einbringen der Isoliermasse zumindest während der Expansionsphase der Schaummasse (14) mittels eines Förderers (4) quer zu seiner Längsrichtung abtransportiert wird, daß die Stirnenden des Verbundprofiles (3) wenigstens teilweise mittels Verschließeinrichtungen abgedeckt werden, welche jeweils synchron mit dem Verbundprofil (3) bewegbare Verschließelemente aufweisen, und daß die Verschließeinrichtungen und/oder Teile des Verbundprofiles (3) mit Entlüftungsöffnungen (19, 20) versehen sind.

2. Verfahren nach Anspruch 1, dadurch gekennzeichnet, daß das Verschließelement jeder Verschließeinrichtung ein angetriebener Riementrieb (5, 6) ist, dessen Umlenkrollen (8, 9) auf vertikalen Achsen drehbar gelagert sind.

3. Verfahren nach Anspruch 2, dadurch gekennzeichnet, daß zwischen den Stirnenden der Verbundprofile (3) und dem zugeordneten Trum des Riemens (7) des Riementriebes (5) ein mit dem Riementrum mitbewegtes Dichtband (15) angeordnet ist.

4. Verfahren nach Anspruch 3, dadurch gekennzeichnet, daß das Dichtband (15) an der die Stirnenden der Verbundprofile (3) kontaktierenden Seite eine sich in Längsrichtung erstreckende Entlüftungsnut (18) aufweist, die innerhalb der Höhe der Kammer für die Schaummasse (14) liegt.

5. Verfahren nach einem oder mehreren der vorhergehenden Ansprüche 1 bis 3, dadurch gekennzeichnet, daß die obere und/oder untere Kante des Riemens (7) des Riementriebes (5, 6) und gegebenenfalls die obere und/oder untere Kante des Dichtbandes (15) gegenüber der zugeordneten Kante der Aufnahmekammer für die Schaummasse (14) zur Bildung von Entgasungsöffnungen (19) jeweils in Richtung zur anderen Kante versetzt stehen.

6. Verfahren nach Anspruch 1, dadurch gekennzeichnet, daß die Isolierstege (12, 13) mit Entgasungsöffnungen (20) versehen sind, die über die gesamte Länge des Verbundprofils verteilt angeordnet sind.

7. Verfahren nach Anspruch 1, dadurch gekennzeichnet, daß die Entgasungsöffnungen in den Stirnendbereichen angeordnet sind.
